Europäisches Patentamt

European Patent Office

Office européen des brevets

(11) Publication number: **0 195 330 B1**

(12) **EUROPEAN PATENT SPECIFICATION**

(45) Date of publication of patent specification: **17.06.92** (51) Int. Cl.⁵: **G11B 23/00**, G11B 23/033

(21) Application number: **86103097.1**

(22) Date of filing: **10.03.86**

(54) **Flexible magnetic diskette.**

(30) Priority: **13.03.85 JP 48165/85**

(43) Date of publication of application:
**24.09.86 Bulletin 86/39**

(45) Publication of the grant of the patent:
**17.06.92 Bulletin 92/25**

(84) Designated Contracting States:
**DE FR GB NL**

(56) References cited:
EP-A- 0 085 983          EP-A- 0 133 541
FR-A- 2 488 714          GB-A- 2 102 188
GB-A- 2 108 309          GB-A- 2 127 206
US-A- 4 149 207

(73) Proprietor: **FUJITSU LIMITED**
**1015, Kamikodanaka Nakahara-ku**
**Kawasaki-shi Kanagawa 211(JP)**

Proprietor: **FUJITSU KASEI LTD.**
**654, Kawawa-cho, Midori-ku**
**Yokohama-shi Kanagawa 226(JP)**

Proprietor: **Nippon Telegraph and Telephone**
**Corporation**
**1-6 Uchisaiwaicho 1-chome Chiyoda-ku**
**Tokyo 100(JP)**

(72) Inventor: **Kimura, Takashi**
**Saginuma Rairakku 1-408 7-2, Arima**
**Miyamae-ku Kawasaki-shi Kanagawa 213(JP)**
Inventor: **Chihara, Kenichi**
**433-14, Kajigaya-cho Totsuka-ku**
**Yokohama-shi Kanagawa 247(JP)**
Inventor: **Tomatsu, Masahiro c/o FUJITSU**
**KASEI LTD**
**654, Kawawa-cho Midori-ku**
**Yokohama-shi Kanagawa 226(JP)**
Inventor: **Inoue, Kazunobu c/o FUJITSU KASEI**
**LTD**
**654, Kawawa-cho Midori-ku**
**Yokohama-shi Kanagawa 226(JP)**
Inventor: **Yano, Norio**
**4-8-8, Iwato**
**Yokosuka-shi Kanagawa 239(JP)**
Inventor: **Adachi, Osamu**
**NTT Shataku 5-403 94, Nagasawa**
**Yokosuka-shi Kanagawa 239(JP)**

(74) Representative: **Seeger, Wolfgang, Dipl.-Phys.**
**SEEGER & SEEGER Patentanwälte & Euro-**
**pean Patent Attorneys Georg-Hager-Strasse**
**40**
**W-8000 München 70(DE)**

## Description

### BACKGROUND OF THE INVENTION

This invention relates to a flexible magnetic diskette for magnetically storing various information recorded and read by a magnetic head and engagable with and rotationally driven by a driving unit, said diskette comprising a plastic disk sheet having two sides which are uniformly coated with magnetic material and having a mount hole at a center thereof and including a periphery; and holding means, mounted at the periphery of said mount hole, for securing said plastic disk sheet, said holding means comprising a holder body, made of plastic and held to said flexible disk sheet at the periphery of said mount hole; a core member made of a magnetic metal and rigidly attached to said holder body and spaced from said plastic disk sheet, a center of the core member aligning with the center of said plastic disk sheet, wherein said holder body and said core member each have corresponding shaft insert holes passing therethrough, through which the center shaft is inserted, and the disk sheet is thus positioned relative to the magnetic head.

Recently, a flexible magnetic diskette (usually referred to as a floppy disk including a thin flexible disk sheet has become widely used because of its simple and low cost recording and regeneration capability. The flexible magnetic diskette conventionally includes a plastic disk sheet, uniformly coated on both sides with a magnetic material, and a holder for securing the periphery of a mount hole provided in the center of the disk sheet. Generally, such a flexible magnetic diskette is rotatable and is accomodated in a hard case or cartridge, usually referred to as a magnetic disk cartridge, which can be inserted into a disk drive unit for operating the function of recording or regeneration.

A holder for securing the periphery of the mount hole of the flexible sheet is conventionally made of a pressed metal sheet or molded plastic material. However, the holders known in the prior art are not satisfactory for rigidly holding the magnetic sheet while maintaining the flexibility and desirable abrasion resistance thereof.

GB-A-2 102 188 teaches a flexible magnetic diskette having a holding means consisting of a hub 6 and an angular magnetic member 11, suitably mounted on its lower surface. However, this publication does not teach a flexible magnetic diskette having high abrasive resistance.

EP-A-0 133 541 discloses a diskette, wherein a recording medium is clamped between the angular ring and a flange of the hub body. A re-enforcing metal plate is directly adhered to the opposite side of the magnetic diskette. This publication does not disclose an adhesive bonding between the flexible disk sheet and the holding means.

### SUMMARY OF THE INVENTION

Accordingly, an object of the present invention is to provide a flexible magnetic diskette provided with a holder for securing the periphery of the mount hole of the flexible sheet, which holder is satisfactory for rigidly holding the magnetic sheet while maintaining the flexibility and desirable abrasion resistance thereof.

This object has been achieved by the features of claim 1.

In the present invention, as the holding means comprises a plastic holder body and a metal core member, the flexible magnetic sheet can be retained in a stable condition and unfavorable deformation or undulation can be effectively prevented from occurring at the peripheral portions around the mount hole of the magnetic sheet. The stability against deformation is further increased because the temperature at which the material of the holder body 54 is deformed by an external force ist raised. In addition, the plastic holder body does not come into direct touch with the drive unit; only the core member is in contact with the drive unit. Therefore, this diskette has good endurance properties for long term use.

### BRIEF DESCRIPTION OF THE DRAWINGS

Figure 1 is a cross-sectional view of a flexible magnetic diskette according to the present invention;

Figure 2 is an exploded perspective view of the flexible magnetic diskette shown in Fig. 1;

Figure 3 is a cross-sectional view of disk cartridge comprising a flexible magnetic diskette inserted in a cartridge, in which a disk drive unit is illustrated by a dotted line;

Figure 4 is a view of the cartridge seen from a point IV in Fig. 3;

Figure 5 is a perspective view of the magnetic disk cartridge as shown in Fig. 3;

Figure 6 is a bottom plan view of the magnetic disk cartridge as shown in Fig. 3;

Figure 7 is an exploded perspective view of the magnetic disk cartridge as shown in Fig. 3;

Figure 8 is a cross-sectional view of another embodiment of a flexible magnetic diskette according to the present invention;

Figure 9 is an exploded perspective view of the flexible magnetic diskette shown in Fig. 8; and

Figure 10 is an exploded perspective view of a disk cartridge including the diskette shown in Fig. 8.

## DESCRIPTION OF THE PREFERRED EMBODIMENTS

In the drawings, the same reference numerals and marks denote the same or corresponding parts of the embodiments of this invention.

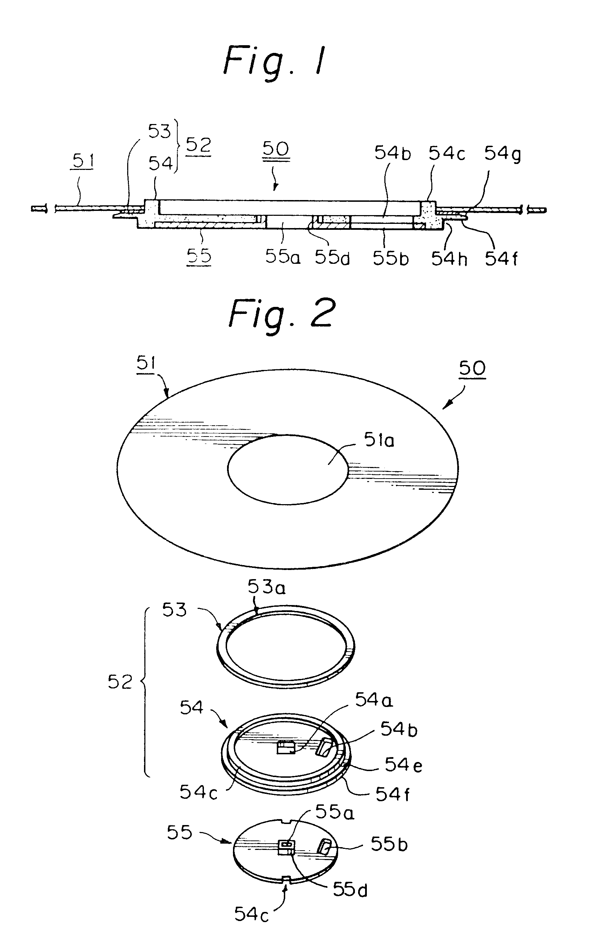

Referring now to the drawings, a first embodiment of a flexible magnetic diskette 50 according to the present invention comprises, as shown in Figs. 1 and 2, a flexible magnetic sheet 51, a holder 52 including a double-sided adhesive ring 53 and a plate body 54, and a flat core member 55 secured to the rotation driven side (bottom face) of the holder 52. The flexible magnetic sheet 51 is formed as a disk having a mount hole 51a at the center thereof. The adhesive ring 53 is made of a plastic film or sheet, and an adhesive material is coated on both sides thereof. The adhesive ring 53 is formed with an opening 53a having an inner diameter of substantially the same as the inner diameter of the mount hole 51a of the flexible magnetic sheet 51.

The body 54 of the holder 52 is formed, by molding, as a disk plate of a plastic material having substantially the same or similar coefficient of thermal expansion as that of the flexible magnetic sheet 51. The body 54 is provided with a rectangular shaft insert hole 54a at the center thereof and a drive pin insert hole 54b in the vicinity of the hole 54a, and an upright cylindrical projection 54c having an outer periphery capable of fitting into the mount hole 51a of the flexible magnetic sheet 51. The body 54 is also provided with an outer flange 54f having a flat ring-shaped supporting face 54e arranged at the outer periphery of the cylindrical projection 54c via a step. The supporting surface 54e is provided at the outer periphery thereof with an inclined face 54g (see Fig. 1). On the other hand, the body 54 is provided at its bottom with a cylindrical projection 54h (see Fig. 1) connected to the flange 54f via a step.

The body 54 of the holder 52 is advantageously made of a material, such as a polycarbonate including an additive of 5 to 35 weight%, more preferably about 20 weight% of carbon milled fibers.

The core member 55 is a substantially flat disk made of a magnetic metal such as ferrite stainless steel, for example, SUS 430 (ISO), having a coefficient of thermal expansion of $10.3 \times 10^{-6}_{\mathrm{m}} /^\circ C$ and having a good abrasion resistance. The core member 55 is provided with a shaft insert hole 55a at the center thereof, and in the vicinity thereof, with a drive pin insert hole 55b capable of aligning with the drive pin insert hole 54b of the holder body 54, a pair of diametrically opposed notches 55c at the outer periphery thereof for preventing free rotation thereof, and a neck portion 55d projected upward at the outer periphery thereof formed by, for example, burring.

The flexible magnetic diskette 50 shown in Fig. 1 can be assembled as follows. First, the core member 55 is rigidly attached to the holder body 54. In this process, it is advantageous that the core member 55 be integrally molded with the holder body 54 when the latter is formed by molding. However, it is also advantageous that the holder body 54 having at its lower face a recess for accommodating the core member 55 be formed independently with respect to the latter, as seen in Fig. 2, and the core member 55 then rigidly fitted to that recess of the holder body 54. In this case, the neck portion 55d of the core member 55 should be a little smaller than the shaft insert hold 54a of the holder body 54, to facilitate the insertion of the core member 55, and should be positioned with respect to the holder body 54 by the outer periphery of the core member 55 and the insert recess of the holder body 54, so that the drive pin insert holes 54b and 55b are aligned with each other. Then, the double-sided adhesive ring sheet 53 is fitted to the outer periphery of the cylindrical projection 54c and adhered to the supporting face 54e of the holder body 54. The magnetic sheet 51 is then inserted in the holder body 54 by fitting the mount hole 51a of the former to the outer periphery of the cylindrical projection 54c of the holder body 54. The magnetic sheet 51 is thus rigidly adhered by the inner edge of the mount hole 51a to the adhesive ring sheet 53.

Thus, in the first embodiment as mentioned above, the holder 52 comprising the adhesive ring 53 and the holder body 54 serves to hold the magnetic sheet 51, and the core member 55 has the insert hole 55a in which the rotation drive shaft (not shown in Figs. 1 and 2) is directly engaged.

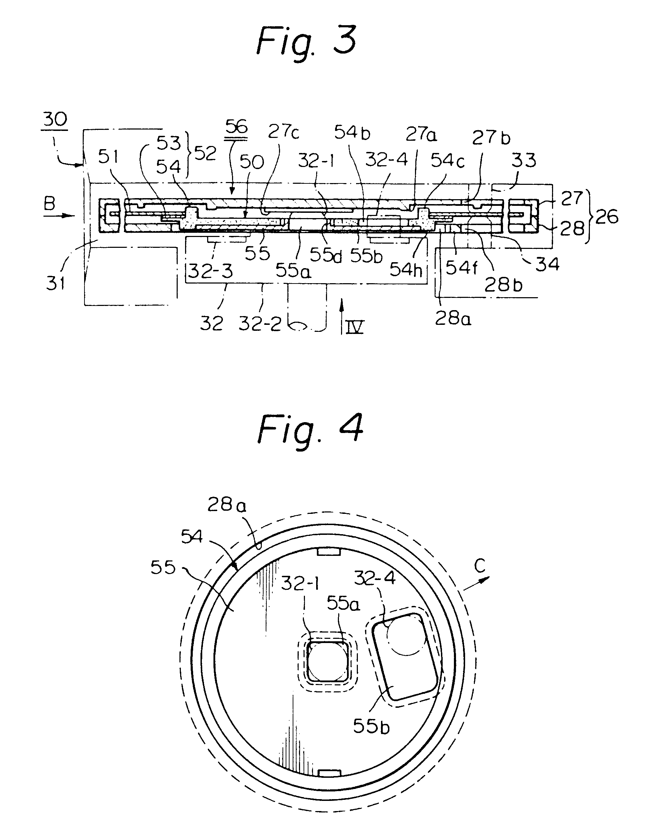

In Figs. 3 and 4, a magnetic disk cartridge 56 comprises a diskette 50, as mentioned above, and a hard case 26 for accommodating the diskette 50. The hard case 26 comprises upper and lower case halves 27 and 28 abutted together along the peripheral edges thereof. The upper case half 27 is provided on its inner wall with a center plate 27c and a cylindrical wall 27a therearound. The outer diameter of the cylindrical wall 27a is a little smaller than the inner diameter of the cylindrical projection 54c of the holder body 54, to allow the diskette 50 some freedom in the radial direction. The lower case half 28 is provided at its center with a circular opening 28a, which is a little larger than the outer diameter of the cylindrical projection 54h of the holder body 54, also to give the diskette 50 freedom in the radial direction. Therefore, the diskette 50 is rotatably accommodated in the case 26 with some freedom in the radial direction. The upper and lower case halves 27 and 28 have corresponding head insert holes 27b and 28b. A disk drive unit 30, generally shown by a dotted line, is provided with a cartridge insert slot 31, a chuck 32 at the inside of the cartridge insert slot 31, and a pair of upper and lower magnetic heads 33 and 34. The chuck 32 generally comprises a center shaft 32-1, a rotary table 32-2 rigidly mounted on the center shaft 32-1, a ring-shaped magnet 32-3 mounted on the upper periphery of the rotary table 32-2, and a drive pin 32-4 mounted on the rotary table 32-2 so as to be capable of protruding upward therefrom.

The cartridge 56 is inserted into the insert slot 31, as shown by an arrow B, and the case 26 is then placed in a predetermined position. Then, the rotary center shaft 32-1 and the drive pin 32-4 are automatically advanced to engage with the shaft insert hole 55a and the pin insert hole 55b of the core 55, respectively. On the other hand, the upper and lower magnetic heads 33 and 34 are given access to the magnetic sheet 51 to conduct a read or write (record) operation, as necessary. During these operations, the bottom of the core 55 is attracted to the support table 32-2 by means of the ring-shaped magnet 32-3 and also urged radially outward, as shown by an arrow C in Fig. 4, by the drive pin 32-4, so that the adjacent two sides of the insert hole 55b engage with the rotary shaft 32-1 and, therefore, the flexible sheet 51 is located in its prescribed position. Thus, the magnetic diskette 50 can be rotated by the drive pin 32-4.

To ensure a contact as perfect as possible between the flexible magnetic sheet 51 and the upper and lower magnetic heads 33 and 34, it is advantageous in practice that the lower magnetic head 34 be located slightly above the ideal contact surface of rotation by a small distance, for example, a few $100 \times 10^{-6}$ m (100 microns), and on the other hand, the upper magnetic head 33 be urged downward with a small spring force, such as 20 g, for a 8,89 cm (3.5 inch) diskette.

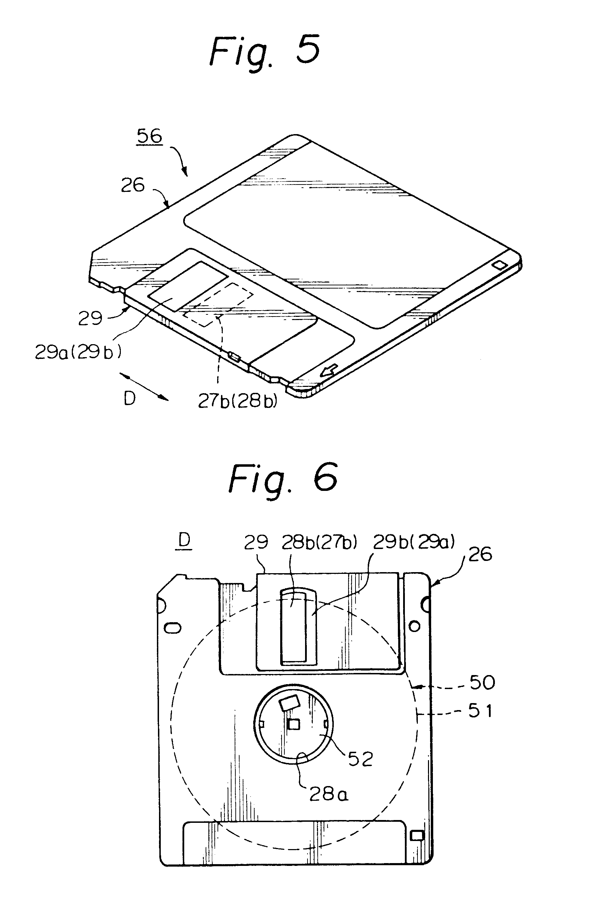

Figures 5 and 6 show the outer appearance of the magnetic disc cartridge 56, in which a shutter 29 is made of thin plate material and formed in a U-shaped cross-section, and is provided with a pair of upper and lower windows 29a and 29b. The shutter 29 is slidingly mounted on the case 26, in the direction as shown by an arrow D, so that the head insert hole 27b (28b) is closed by a spring means, not shown, when the cartridge 56 is not inserted and, on the other hand, automatically opened, as shown in Fig. 6, by the drive unit 30 (Fig. 3) when the cartridge 56 is inserted.

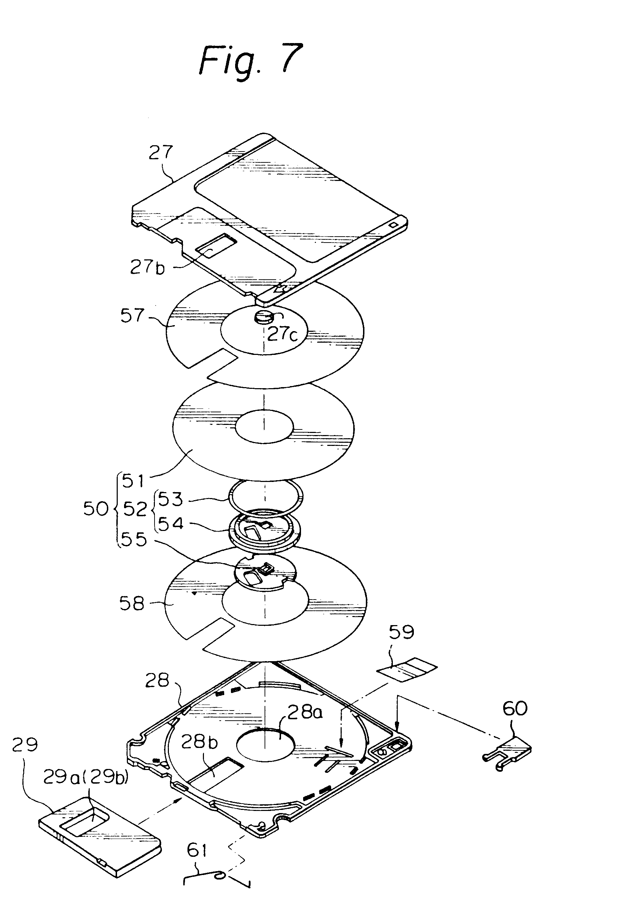

Figure 7 illustrates an exploded perspective view of the magnetic disc cartridge 56, in which reference numerals 57 and 58 denote upper and lower sheets made of a non-fabric material. At least a part of each sheet is adhered to the upper or lower case half 27 or 28 and another part thereof is in contact with the front or back surface of the magnetic sheet 51, to remove any dust attached to the disk surfaces and to compensate for any possible nonuniformity of the rotation surfaces of the magnetic sheet 51 during rotation thereof. Reference numeral 59 denotes a leaf spring having one end mounted on the lower case half 28 and the other end in resilient contact with and exerting a slight force on the non-fabric material sheet 58, to push it toward the magnetic sheet 51; 60 denotes a protecting means for preventing unintentional recording; and 61 denotes a spring means constantly urging the shutter 29 in a predetermined direction.

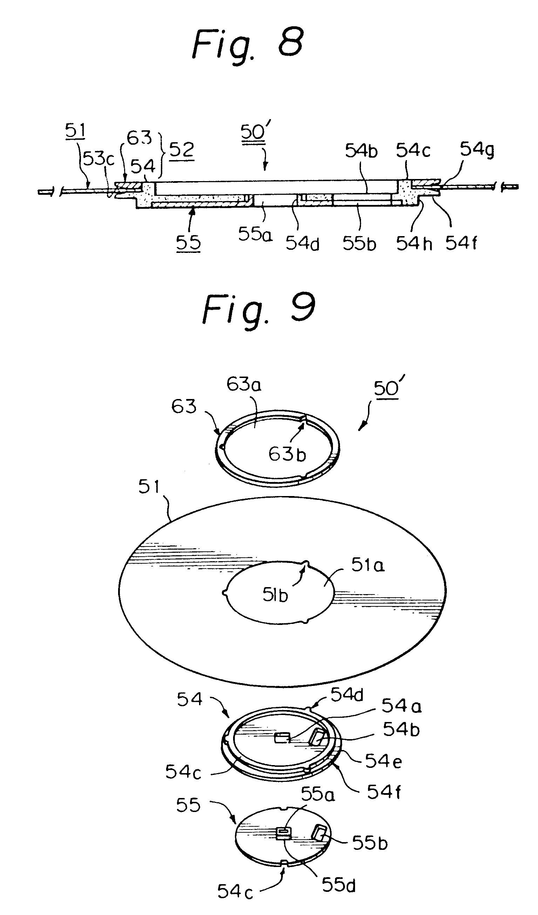

Figures 8 and 9 illustrate a second embodiment of a flexible magnetic diskette according to the present invention. Only the constructions and operations thereof which are different from those of the first embodiment will be described. The diskette 50' includes a holding ring plate 63 in place of the double-sided adhesive ring 53 (Figs. 1 and 2).

The flexible magnetic sheet 51 is provided with a mount hole 51a, as well as several (in this case, three) notches 51b equidistantly set around the peripheral edge of the mount hole 51a for restricting the disc in the direction of rotation thereof. The holding ring plate 63 is made of a flat metal plate having a coefficient of thermal expansion substantially the same or similar to that of the flexible magnetic sheet 51 and formed with an opening 63a having an inner diameter substantially the same as the inner diameter of the mount hole 51a of the flexible magnetic sheet 51. The ring 63 is also provided with several notches 63b corresponding to the above-mentioned notches 51b of the flexible magnetic sheet 51 and an inclined face 63c along the bottom outer peripheral edge thereof. The holding ring 63 also can be made of any suitable plastic material. The holder body 54 is provided, on the outer side wall of the cylindrical projection 54c, with several projections 54d capable of engaging with the notches 51b of the magnetic sheet 51.

The flexible magnetic diskette 50' shown in Fig. 8 can be assembled as follows. First, the core member 55 is rigidly attached to the holder body 54, in the same manner as in the first embodiment described above. Then, the magnetic sheet 51 is inserted into the holder body 54 by fitting the mount hole 51a of the former to the outer periphery of the cylindrical projection 54c of the holder body 54 and also engaging the dent portions 51b with the projections 54d. The magnetic sheet 51 is supported by the inner edge of the mount hole 51a on the ring supporting surface 54e of the holder body 54 and restricted in the circumferential direction by the projections 54d. The ring plate 63 is then inserted into the body 54 through the magnetic sheet 51 by fitting the hole 63a of the ring plate 63 onto the cylindrical projected portion 54c of the holder body 54 and engaging the dent portions 63b with the projections 54d. Then, the upper end of the cylindrical projected portion 54c of the body 54 is pressed and heat-deformed so as to rigidly secure the ring plate 63 to the body 54. Thus, in this second embodiment as mentioned above, the holder 52 comprising the pushing ring plate 63 and the holder body 54 serves to nippingly hold the magnetic sheet 51.

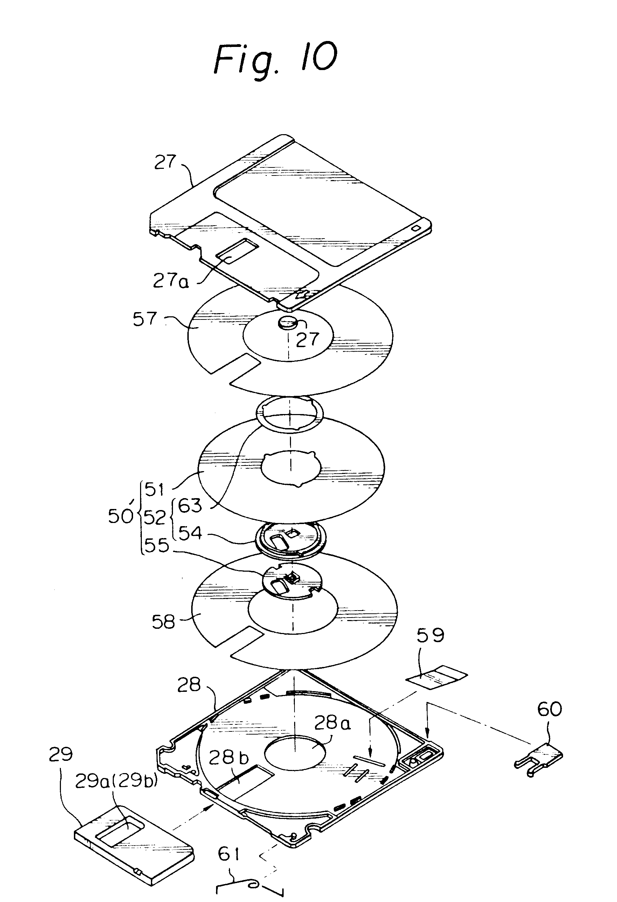

In Fig. 10, the magnetic disk cartridge 56 is illustrated in an exploded perspective view, which is similar to Fig. 7, but showing the magnetic diskette 50' of the second embodiment including the non-adhesive holding ring plate 63.

## Claims

1. A flexible magnetic diskette for magnetically storing various information recorded and read by a magnetic head and engagable with and rotationally driven by a driving unit, said diskette comprising:

a plastic disk sheet (51) having two sides which are uniformly coated with magnetic material and having a mount hole (51c) at a center thereof and including a periphery; and

holding means (52, 53, 54), mounted at the periphery of said mount hole (51a), for securing said plastic disk sheet (51), said holding means comprising:

a holder body (54), made of plastic and held to said flexible disk sheet at the periphery of said mount hole;

a core member (55) made of a magnetic metal and rigidly attached to said holder body (54) and spaced from said plastic disk sheet (51), a center of the core member (55) aligning with the center of said plastic disk sheet (51),

wherein said holder body (54) and said core member (55) each have corresponding shaft insert holes (55a) passing therethrough, through which the center shaft (32-1) is inserted, and the disk sheet is thus positioned relative to the magnetic head,

characterized in that the holder body (54) is made of polycarbonate containing an additive of 5 to 35 weight % of carbon milled fibers

a double-sided adhesive ring (53) between said holder body (54) and one side of said plastic disk sheet adhesively secures said plastic disk sheet (51) to said holder body (54) and

the core member (55) have a high abrasive resistance.

2. A flexible magnetic diskette as set forth in claim 1, wherein said corresponding shaft insert holes (55a) are rectangular.

3. A flexible magnetic diskette as set forth in any preceding claim, wherein said shaft insert hole has an inner wall (55a), said core member (55) includes a central portion and said shaft insert hole (55a) of said core member (55) is formed by bending the central portion thereof by burring, so that the bent central portion (54) of said core member is arranged adjacent to the inner wall of said shaft insert hole of said holder body (54).

4. A flexible magnetic diskette as set forth in any preceding claim, wherein said holder body (54) and said core member (55) each have corresponding drive pin insert holes (54b) passing therethrough adjacent to said shaft insert holes (55a).

5. A flexible magnetic diskette as set forth in any preceding claim, wherein said core member (55) is molded integrally with said plastic holder body (54)

6. A flexible magnetic diskette as set forth in any preceding claim , wherein said core member (55) is made of ferrite stainless steel.

7. A flexible magnetic diskette as set forth in any preceding claim, wherein the core member (55) is rigidly attached to at least one of the surfaces of the substantially disk-shaped holder body (54) having a ring-shaped flat-flanged support surface on the outer periphery of said holder body (54) at the opposite side of said holder body (54) from said core member (55).

8. A flexible magnetic diskette as set forth in any preceding claim, wherein said holder body (54) further comprises a cylindrical projection (54c) having an outer wall thereof engaging with the mount hole (51a) of said plastic disk sheet (50) at the opposite side of said holder body (54) from said core member (55).

9. A flexible-magnetic diskette as set forth in any preceding claim, wherein said ring-shaped flat-flanged support surface (54f) is tapered at an outer edge (54g) thereof, separating it form said plastic disk sheet (50).

10. A flexible magnetic diskette as set forth in any preceding claim, wherein a ring plate (63) is fitted to said cylindrical projection (54c) of said holder body (54) to nippingly hold said plastic disk sheet (50) at the peripheral portion of said mount hole (51a) thereof.

**11.** A flexible magnetic diskette as set forth in any preceding claim, wherein:

said outer wall is provided with projections (54c) equidistantly arranged thereon;

said plastic disc sheet has notches (51b) equidistantly arranged along the edge of said mount hole (51a); and

said ring plate (63) has an inner wall having notches (63b) equidistantly arranged therealong engaging with said projections (54c) of said holder body (54).

**12.** A flexible diskette as set forth in any preceding claim, wherein said holding means (53, 54, 55) rigidly holds said flexible disk sheet (50) at said mount hole (51a), said ring shaped magnet magnetically attracting said core member (55) when said diskette engages said driving unit (32), holding the diskette against the driving unit and allowing said disk sheet (50) flexibility of movement.

**Revendications**

**1.** Disquette magnétique souple pour stocker magnétiquement diverses informations enregistrées et lues au moyen d'une tête magnétique, cette disquette pouvant être introduite et pouvant être entraînée en rotation au moyen d'une unité d'entraînement, ladite disquette comprenant :

une feuille de disque en plastique (51) comportant deux côtés qui sont recouverts uniformément d'un matériau magnétique et comportant un trou de montage (51c) au niveau de son centre, incluant une périphérie ; et

un moyen de maintien (52, 53, 54) monté au niveau de la périphérie dudit trou de montage (51a) pour fixer ladite feuille de disque en plastique (51), ledit moyen de maintien comprenant :

un corps de support (54) réalisé en plastique et maintenu sur ladite feuille de disque souple au niveau de la périphérie dudit trou de montage ;

un élément d'âme (55) réalisé en un métal magnétique, fixé de manière rigide audit corps de support (54) et espacé de ladite feuille de disque en plastique (51), un centre de l'élément d'âme (55) étant aligné avec le centre de ladite feuille de disque en plastique (51),

dans lequel ledit corps de support (54) et ledit élément d'âme (55) comportent chacun des trous d'insertion d'arbre correpondants (55a) qui les traversent au travers desquels l'arbre central (32-1) est inséré, et la feuille de disque est ainsi positionnée par rapport à la tête magnétique ;

caractérisée en ce que :

le corps de support (54) est réalisé en polycarbonate qui contient un additif de 5 à 35% par unité de poids de fibres de carbone broyées ;

une bague adhésive sur deux côtés (53) qui est située entre ledit corps de support (54) et un côté de ladite feuille de disque en plastique fixe de manière adhésive ladite feuille de disque en plastique (51) sur ledit corps de support (54) ; et

l'élément d'âme (55) a une résistance élevée à l'abrasion.

**2.** Disquette magnétique souple selon la revendication 1, dans laquelle lesdits trous d'insertion d'arbre correspondants (55a) sont rectangulaires.

**3.** Disquette magnétique souple selon l'une quelconque des revendications précédentes, dans laquelle ledit trou d'insertion d'arbre comporte une paroi interne (55a), ledit élément d'âme (55) comporte une partie centrale et ledit trou d'insertion d'arbre (55a) dudit élément d'âme (55) est formé en cintrant sa partie centrale par ébarbage de telle sorte que la partie centrale cintrée (54) dudit élément d'âme soit agencée de manière à être adjacente à la paroi interne dudit trou d'insertion d'arbre dudit corps de support (54).

**4.** Disquette magnétique souple selon l'une quelconque des revendications précédentes, dans laquelle ledit corps de support (54) et ledit élément d'âme (55) comportent chacun des trous d'insertion de plot d'entraînement correspondants (54d) qui les traversent et qui sont adjacents auxdits trous d'insertion d'arbre (55a).

**5.** Disquette magnétique souple selon l'une quelconque des revendications précédentes, dans laquelle ledit élément d'âme (55) est moulé d'un seul tenant avec ledit corps de support en plastique (54).

**6.** Disquette magnétiquè souple selon l'une quelconque des revendications précédentes, dans laquelle ledit élément d'âme (55) est réalisé en un acier inoxydable en ferrite.

**7.** Disquette magnétique souple selon l'une quelconque des revendications précédentes, dans laquelle l'élément d'âme (55) est fixé de manière rigide sur au moins une des surfaces du corps de support sensiblement en forme de disque (54) qui comporte une surface de support en forme de bague à bride plane sur la périphérie externe dudit corps de support (54), au niveau du côté opposé dudit corps de support (54) par rapport audit élément d'âme (55).

8. Disquette magnétique souple selon l'une quelconque des revendications précédentes, dans laquelle ledit corps de support (54) comprend en outre un prolongement cylindrique (54c) dont une paroi externe pénètre dans le trou de montage (51a) de ladite feuille de disque en plastique (50) au niveau du côté opposé dudit corps de support (54) par rapport audit élément d'âme (55).

9. Disquette magnétique souple selon l'une quelconque des revendications précédentes, dans laquelle ladite surface de support en forme de bague à bride plane (54f) est inclinée au niveau d'un bord externe (54g) d'elle-même, ce qui la sépare de ladite feuille de disque en plastique (50).

10. Disquette magnétique souple selon l'une quelconque des revendications précédentes, dans laquelle une plaque en forme de bague (63) est emboîtée sur ledit prolongement cylindrique (54c) dudit corps de support (54) afin de maintenir par pincement ladite feuille de disque en plastique (50) au niveau de la partie périphérique dudit trou de montage (51a) de celle-ci.

11. Disquette magnétique souple selon l'une quelconque des revendications précédentes, dans laquelle :
ladite paroi externe est munie de prolongements (54c) qui sont agencés de manière équidistante sur elle ;
ladite feuille de disque en plastique comporte des encoches (51b) qui sont agencées de manière équidistante le long du bord dudit trou de montage (51a) ; et
ladite plaque en forme de bague (63) comporte une paroi interne présentant des encoches (63b) qui sont agencées de manière équidistante sur sa longueur et qui coopèrent avec lesdits prolongements (54c) dudit corps de support (54).

12. Disquette souple selon l'une quelconque des revendications précédentes, dans laquelle ledit moyen de support (53, 54, 55) maintient de manière rigide ladite feuille de disque souple (50) au niveau dudit trou de montage (51a), ledit aimant en forme de bague attirant magnétiquement ledit élément d'âme (55) lorsque ladite disquette coopère avec ladite unité d'entraînement (32), maintenant la disquette contre l'unité d'entraînement et assurant à ladite feuille de disque (50) une flexibilité de mouvement.

**Patentansprüche**

1. Flexible magnetische Diskette zum magnetischen Speichern verschiedener Information, die von einem Magnetkopf aufgezeichnet und gelesen wird, die mit einer Antriebseinheit zum Eingriff kommt und rotiert werden kann, welche Diskette umfaßt:
eine Kunststoffblattscheibe (51), die zwei Seiten hat, die gleichförmig mit einem magnetischen Material überzogen sind, und ein Montageloch (51c) an ihrem Zentrum hat und einen peripheren Bereich aufweist;
Haltereinrichtungen (52, 53, 54), die an der Peripherie des genannten Montageloches (51a) montiert sind, um die genannte Kunststoffblattscheibe (51) zu sichern, welche Haltereinrichungen umfassen:
einen Halterkörper (54), der aus Kunststoff hergestellt ist und an der flexiblen Blattscheibe an dem Umfang des Montageloches gehalten wird;
einem Kernteil (55), das aus magnetischem Material hergestellt ist und starr mit dem Kalterkörper (54) verbunden und mit Abstand von der Kunststoffblattscheibe (51) angeordnet ist, bei einem Zentrum des Kernteils, welches mit dem Zentrum der Kunststoffblattscheibe (51) ausgerichtet wird,
wobei der Halterkörper (54) und das genannte Kernteil (55) jeweils entsprechende Schafteinführungslöcher (55a) haben, die durch sie hindurchdringen, durch welche der zentrale Schaft (32-1) eingeführt wird und die Blattscheibe so relativ zu dem Magnetkopf positioniert wird,
dadurch gekennzeichnet, daß
der Halterkörper (54) aus Polykarbonat hergestellt ist, welches einen Zusatz von 5 - 35 Gewichtsprozent von gemahlenen Karbonfasern enthält, ein doppelseitig klebender Ring (53) zwischen dem Halterkörper (54) und einer Seite der Kunststoffblattscheibe die Kunststoffblattscheibe (51) klebend an dem Halterkörper (54) sichert, und
das Kernteil (55) einen hohen Abriebwiderstand hat.

2. Flexible magnetische Diskette nach Anspruch 1, bei der die entsprechenden Schafteinführungslöcher (55a) rechtwinklig sind.

3. Flexible magnetische Diskette nach einem der vorhergehenden Ansprüche, bei der das Schafteinführungsloch eine innere Wand (55a) hat, das Kernteil (55) einen zentralen Abschnitt enthält und das Schafteinführungsloch (55a) des Kernteils (55) durch Biegen seines zentralen Abschnittes und durch Entgraten gebildet ist, so daß der gebogene zentrale Abschnitt (54) des genannten Kernteils an der inneren Wand des Schafteinführungsloches des Halterkörpers (54) angeordnet ist.

4. Flexible magnetische Diskette nach einem der vorhergehenden Ansprüche, bei der der genannte Halterkörper (54) und das genannte Kernteil (55) jeweils entsprechende Antriebsstift-Einführungslöcher (54) haben, die neben den genannten Schafteinführungslöchern (55a) durch sie hindurchdringen.

5. Flexible magnetische Diskette nach einem der vorhergehenden Ansprüche, bei der das Kernteil (55) einstückig mit dem Kunststoffhalterkörper (54) gegossen ist.

6. Flexible magnetische Diskette nach einem der vorhergehenden Ansprüche, bei der das Kernteil (55) aus Ferrit-Stainless Steel hergestellt ist.

7. Flexible magnetische Diskette nach einem der vorhergehenden Ansprüche, bei der das Kernteil (55) starr mit wenigstens einer der Oberflächen des im wesentlichen scheibenförmigen Halterkörpers (54) verbunden ist, der eine ringförmige, mit einem flachen Flansch versehene Tragfläche auf dem äußeren Umfang des Halterkörpers (54) an einer Seite aufweist, die gegenüber der Seite des Halterkörpers (54) von dem Kernteil (55) ist.

8. Flexible magnetische Diskette nach einem der vorhergehenden Ansprüche, bei der der genannte Halterkörper (54) ferner einen zylindischen Vorsprung (54c) umfaßt, der eine äußere Wand hat, welche mit dem Montageloch (51a) der genannten Kunststoffblattscheibe (50) an der Seite des Halterkörpers (54) zum Eingriff kommt, der dem Kernteil (55) gegenüberliegt.

9. Flexible magnetische Diskette nach einem der vorhergehenden Ansprüche, bei der die ringförmige, einen flachen Flansch aufweisende Tragfläche (54f) an einem äußeren Rand (54g) abgeschrägt ist, welcher sie von der Kunststoffblattscheibe (50) trennt.

10. Flexible magnetische Diskette nach einem der vorhergehenden Ansprüche, bei der eine Ringplatte (63) auf den zylindrischen Vorsprung (54c) des genannten Halterkörpers (54) aufgepaßt ist, um die Kunststoffscheibe (50) an dem peripheren Abschnitt ihres Montageloches (51a) klemmend zu halten.

11. Flexible magnetische Diskette nach einem der vorhergehenden Ansprüche, bei der:

die äußere Wand mit gleichen Abständen angeordnet Vorsprünge (54c) aufweist;

die Kunststoffblattscheibe Kerben (51b) hat, die mit gleichen Abständen längs dem Rand des Montageloches (51a) angeordnet sind; und

die genannte Ringplatte (63) eine innere Wand hat, die Kerben (63b) aufweist, die mit gleichem Abstand daran entlang angeordnet sind und mit den Vorsprüngen (54c) des Halterkörpers (54) zum Eingriff kommen.

12. Flexible Diskette nach einem der vorhergehenden Ansprüche, bei der die genannte Haltereinrichtung (53, 54, 55) die flexible Blattscheibe (50) starr an dem Montageloch (51a) hält, der ringförmige Magnet das Kernteil (55) magnetisch anzieht, wenn die Diskette mit der Antriebseinheit (32) zum Eingriff kommt, und die Diskette gegen die Antriebseinheit hält und die Flexibilitätsbewegung der Blattscheibe (50) erlaubt.

# Fig. 1

# Fig. 2

EP 0 195 330 B1

# Fig. 3

# Fig. 4

# Fig. 5

# Fig. 6

# Fig. 7

# Fig. 8

# Fig. 9

# Fig. 10